# EUROPEAN PATENT APPLICATION

(11) **EP 4 741 690 A1**
(43) Date of publication of application: **13.05.2026**
(21) Application number: 24899595.3
(22) Date of filing: 15.11.2024
(51) Int. Cl.: F16K 3/314, F16K 11/065

(54) **SLIDING BLOCK ASSEMBLY AND SWITCHING VALVE**

(30) Priority: 04.12.2023 CN 202323290508 U
(71) Applicant: Zhejiang Dunan Artificial Environment Co., Ltd., Shaoxing Zhejiang 311835 (CN)
(72) Inventor: SHAO, Jucan, Shaoxing, Zhejiang 311835 (CN); LIU, Haibo, Shaoxing, Zhejiang 311835 (CN); YI, Wei, Shaoxing, Zhejiang 311835 (CN)
(74) Representative: Petraz, Gilberto Luigi
(86) International application number: PCT/CN2024/132388
(87) International publication number: WO 2025/118953

(57) **Abstract**

A sliding block assembly and a switching valve are provided. The sliding block assembly includes a slider body (1) and an inner shell (2). The slider body (1) is provided with an internal cavity (11), the inner shell (2) is located in the internal cavity (11), an outer flow channel (21) is enclosed between an outer surface of the inner shell (2) and a cavity wall of the internal cavity (11). An inner flow channel (22) is enclosed by an inner surface of the inner shell (2), the inner shell (2) is fixed to the cavity wall of the internal cavity (11) by welding.

## Description

### CROSS-REFERENCE TO RELATED APPLICATION

This application claims priority to Chinese Patent Application No. 202323290508.3, filed on December 04, 2023 with Chinese patent office, entitled "SLIDING BLOCK ASSEMBLY AND SWITCHING VALVE", the content of which is hereby incorporated by reference in its entirety.

### TECHNICAL FIELD

The present application relates to the field of switching valve technology, and in particular, to a sliding block assembly and a switching valve.

### BACKGROUND

The switching valve includes a valve body and a sliding block assembly. A plurality of nozzles are connected to the valve body, and the sliding block assembly is slidably disposed within the valve body, with an internal cavity formed inside the sliding block assembly. By sliding the sliding block assembly within the valve body, different nozzles can communicate with each other via the internal cavity, thereby achieving reversing of the switching valve.

Some sliding block assemblies is further provided with an inner shell. The inner shell divides the internal cavity of the sliding block assembly into two flow passages, so as to avoid turbulence when a fluid flows through the internal cavity. In the relate art, the sliding block assembly configured with an inner shell, the inner shell is generally clamped to the sliding block assembly. On the one hand, separate machining of clamping-fit structures is required for both the inner shell and the sliding block assembly, which complicates machining of the inner shell and the sliding block assembly and increases production costs. On the other hand, the inner shell is not stably mounted; the inner shell may wobble under fluid impact, generating noise, and there is a risk that the inner shell may detach from the sliding block assembly.

### SUMMARY

According to various embodiments of the present application, a slider block assembly and a switching valve are provided.

The present application provides the following technical solutions: a sliding block assembly. The sliding block assembly includes a slider body and an inner shell. The slider body is provided with an internal cavity, the inner shell is located in the internal cavity, an outer flow channel is enclosed between an outer surface of the inner shell and a cavity wall of the internal cavity. An inner flow channel is enclosed by an inner surface of the inner shell. The inner shell is fixed to the cavity wall of the internal cavity by welding.

In some embodiments, two welding portions are disposed on the inner shell and located on two sides of the inner shell, respectively. In this way, both sides of the inner shell are fixed to the slider body by welding, resulting in a more stable connection.

In some embodiments, the inner shell is provided with a notch, the notch is located at an opening of the inner shell, and the notch is configured as the welding portion. In this way, the welding portion is simple to machine, and welding via the notch prevents solder from flowing to the first end surface of the slider body, which would otherwise affect the sealing between the slider body and a valve seat.

In some embodiments, the notch includes a straight section. In this way, an operator can perform welding along the straight section, making the welding operation more convenient.

In some embodiments, the slider body has a first end surface, the inner shell has a second end surface, the second end surface of the inner shell is located in the internal cavity, a distance between the first end surface of the slider body and the second end surface of the inner shell is defined as A, and the distance A between the first end surface of the slider body and the second end surface of the inner shell is in a range of 0.1 mm to 1 mm. In this way, the distance A between the first end surface of the slider body and the second end surface of the inner shell reserves a wear allowance for the first end surface of the slider body.

In some embodiments, the slider body has a first end surface, the straight section is parallel to the first end surface of the slider body, a distance between the straight section and the first end surface of the slider body is defined as B, and the distance B between the straight section and the first end surface of the slider body is in a range of 1.5 mm to 8 mm. In this way, the distance B between the straight section and the first end surface of the slider body ensures the spacing between the welding position and the first end surface of the slider body, preventing welding from affecting the flatness of the first end surface of the slider body.

In some embodiments, the sliding block assembly further includes a support pin, the support pin is located in the internal cavity, and an end of the support pin is fixed to the slider body and/or the inner shell by welding. In this way, the support pin can improve a compressive capacity of the slider body.

In some embodiments, the notch further includes a positioning recess, and a shape of the positioning recess is adapted to an outer contour of the support pin. In this way, both ends of the support pin can be clamped into the two positioning recesses, thereby positioning the support pin and facilitating subsequent welding of the support pin.

In some embodiments, the slider body includes a main body and a steel bushing, an outer surface of the steel bushing is fixedly connected to the main body, and an inner surface of the steel bushing formsthe internal cavity. In this way, the steel bushing can reinforce the slider body and improve the compressive capacity of the slider body.

To achieve the above purposes, the present application further provides the following technical solutions: a switching valve, which includes the above sliding block assembly.

Beneficial effects of the present application: by welding the inner shell to the slider body, a fixation of the inner shell and the slider body is realized. Neither the inner shell nor the sliding block assembly needs to be machined with clamping-fit structures, which simplifies machining and helps reduce production costs. Moreover, the inner shell is fixed to the slider body by welding, resulting in a stable connection. There is no risk that the inner shell will detach from the slider body, and the inner shell will not wobble, thus avoiding noise generated by the wobble of the inner shell.

Details of one or more embodiments of the present application are presented in the attached drawings and descriptions below. And other features, purposes and advantages of the present application will become apparent from the description, drawings and claims.

### BRIEF DESCRIPTION OF THE DRAWINGS

For a better description and illustration of embodiments and/or examples of those disclosures disclosed herein, reference may be made to one or more attached drawings. Additional details or examples used to describe the drawings should not be considered as limiting the scope of any of the disclosed disclosures, currently described embodiments and/or examples, and currently understood best modes of these disclosures.
FIG. 1 is a perspective view of the slider assembly.
FIG. 2 is a sectional view of the slider assembly.
FIG. 3 is a partial enlarged view of portion A of the slider assembly in FIG. 2.
FIG. 4 is a perspective view of the inner shell.
FIG. 5 is a perspective view of the slider assembly without supporting pins.

In the figures, 1 represents a slider body; 11 represents an internal cavity; 12 represents a first end surface; 13 represents a main body; 14 represents a steel bushing; 2 represents an inner shell; 21 represents an outer flow channel; 22 represents an inner flow channel; 23 represents a notch; 24 represents a straight section; 25 represents a second end surface; 26 represents a positioning recess; and 3 represents a support pin.

### DETAILED DESCRIPTION

The technical solutions of the present application will be clearly and completely described below with reference to the embodiments. Obviously, the described embodiments are a part of the embodiments of the present application, rather than all the embodiments. Based on the embodiments in the present application, all other embodiments obtained by those of ordinary skill in the art without making creative efforts shall fall within the protection scope of the present application.

In the description of the present application, it should be noted that if terms such as "center", "upper", "lower", "left", "right", "vertical", "horizontal", "inner", and "outer" appear, their indicated orientations or positional relationships are based on the orientations or positional relationships shown in the accompanying drawings, which are only for the convenience of describing the present application and simplifying the description, rather than indicating or implying that the referred device or element must have a specific orientation, be constructed and operated in a specific orientation. Therefore, such terms shall not be construed as limiting the present application. In addition, if terms such as "first", "second", and "third" appear, they are only used for descriptive purposes and shall not be construed as indicating or implying relative importance.

In the description of the present application, it should be noted that unless otherwise clearly specified and limited, terms such as "installation", "connection", and "coupling" shall be understood in a broad sense. For example, it may be a fixed connection, a detachable connection, or an integral connection; it may be a mechanical connection or an electrical connection; it may be a direct connection, or an indirect connection via an intermediate medium, or internal communication between two elements. For those of ordinary skill in the art, the specific meanings of the above terms in the present application may be understood according to specific circumstances.

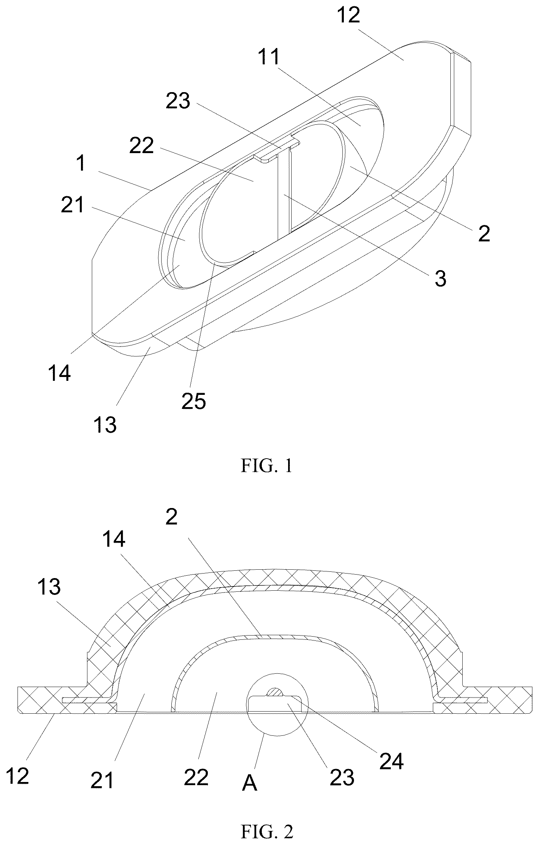

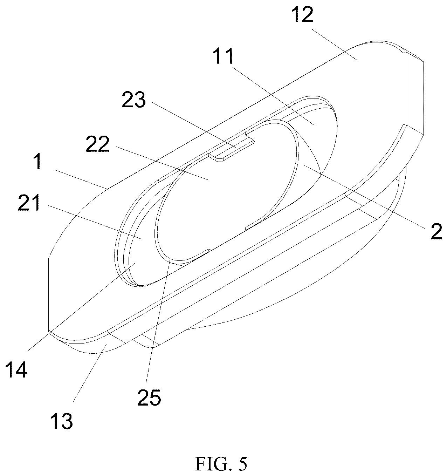

Referring to FIGs. 1, 2, and 5, a sliding block assembly of the present application includes a slider body 1 and an inner shell 2. The slider body 1 includes a main body 13 and a steel bushing 14. The steel bushing 14 includes an inner surface and an outer surface, the outer surface of the steel bushing 14 is fixed to the main body 13, and the inner surface of the steel bushing 14 forms an internal cavity 11. the main body 13 may be injection-molded, and the main body 13 is directly injection-molded on the outer surface of the steel bushing 14, thereby realizing a connection between the main body 13 and the steel bushing 14. the main body 13 is made of plastic material, and the steel bushing 14 is made of steel material. The steel bushing 14 can reinforce the slider body 1 and enhance a compressive strength of the slider body 1. Alternatively, the slider body 1 may not be provided with the steel bushing 14, in which case an inner surface of the main body 13 forms the internal cavity 11.

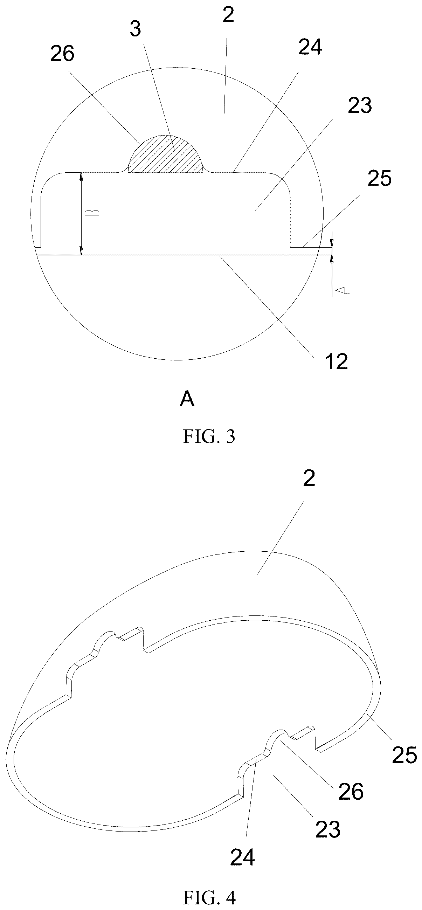

Referring to FIGs. 2 and 4, the inner shell 2 is located in the internal cavity 11. The inner shell 2 is in a bowl shape and the inner shell 2 includes an opening. A part of the outer surface of the inner shell 2 is fitted with a cavity wall of the internal cavity 11, and another part of the outer surface and the cavity wall of the internal cavity 11 is provided a gap. Thus, an outer flow channel 21 is enclosed between the outer surface of the inner shell 2 and the cavity wall of the internal cavity 11, and an inner flow channel 22 is enclosed by the inner surface of the inner shell 2. The part where the outer surface of the inner shell 2 abuts against the cavity wall of the internal cavity 11 and is fixed to the cavity wall of the internal cavity 11 by welding.

When the sliding block assembly is mounted on a switching valve for use, the internal cavity 11 communicates with two nozzles of the switching valve. When the fluid in the nozzles flows through the internal cavity 11, part of the fluid flows through the outer flow channel 21, and the other part flows through the inner flow channel 22. By splitting the fluid, turbulence of the fluid in the internal cavity 11 can be avoided, thereby improving a flow velocity of the fluid.

By welding the inner shell 2 to the slider body 1, a fixation of the inner shell 2 and the slider body 1 is realized. Neither the inner shell 2 nor the sliding block assembly needs to be machined with clamping-fit structures, which simplifies machining and helps reduce production costs. In addition, the inner shell 2 is fixed to the slider body 1 by welding, resulting in a stable connection. There is no risk that the inner shell 2 will detach from the slider body 1, and the inner shell 2 will not wobble, thus avoiding noise generated by the wobble of the inner shell 2.

Specifically, referring to FIGs. 1, 2, and 5, two welding portions are provided on the inner shell 2 and located on two sides of the inner shell 2, respectively. The inner shell 2 is fixed to the cavity wall of the internal cavity 11 through the two welding portions by welding. The welding method may specifically adopt laser welding, argon arc welding, cold welding, or the like. Both sides of the inner shell 2 are fixed to the slider body 1 by welding, leading to a more stable connection.

In one embodiment, referring to FIG. 4, a notch 23 is provided on the inner shell 2, and the notch 23 is located at the opening of the inner shell 2. The notch 23 is configured as the welding portion, and the notch 23 includes a straight section 24. The straight section 24 is disposed on a side of the notch 23 away from the opening of the inner shell 2. Specifically, the notch 23 may be configured as a rectangular notch. The welding portion is configured as the notch 23, which simplifies a machining of the welding portion. Moreover, welding via the notch 23 prevents solder from flowing to the first end surface 12 of the slider body 1, which would otherwise affect the sealing between the slider body 1 and the valve seat, the first end surface 12 is the mating surface between the slider body 1 and the valve seat of the switching valve. An operator welds the notch 23 with a welding torch, the welding at the notch 23 may be spot welding or multi-segment continuous welding. Providing straight section 24 allows the operator to perform welding along said straight section, thereby making the welding operation more convenient.

In one embodiment, referring to FIGs. 1, 2, and 3, the sliding block assembly further includes a support pin 3. The support pin 3 is located in the internal cavity 11, and an end of the support pin 3 is fixed to the slider body 1 and/or the inner shell 2 by welding. The support pin 3 is capable of supporting the slider body 1 and can improving a compressive capacity of the slider body 1. Specifically, both ends of the support pin 3 may be fixed to the slider body 1 by welding, fixed to the inner shell 2 by welding, or fixed to both the slider body 1 and the inner shell 2 simultaneously by welding. When the support pin 3 is fixed to both the slider body 1 and the inner shell 2 by welding, the support pin 3, the slider body 1, and the inner shell 2 may be formed by one-time welding.

In one embodiment, referring to FIGs. 1 to 4, the notch 23 includes a positioning recess 26. A shape of the positioning recess 26 is adapted to an outer contour of the support pin 3, and the positioning recess 26 is disposed on the straight section 24. A shape of a cross-section of the support pin 3 may be in a circular shape, a square shape, a rectangular shape, a semicircular shape, polygonal shape, a D shape, or the like. The shape of the positioning recess 26 is adapted to the support pin 3 such that the support pin 3 can be clamped into the positioning recess 26. In the present application, the cross-section of the support pin 3 is D-shaped, and the positioning recess 26 is configured as a semicircular shape. Since the positioning recess 26 is disposed on the straight section 24, after the support pin 3 is clamped into the positioning recess 26, the support pin 3 and the notch 23 still form a straight section 24, facilitating the operator to weld the support pin 3, the cavity wall of the internal cavity 11, and the inner shell 2. By providing the positioning recess 26, both ends of the support pin 3 can be clamped into the two positioning recesses 26, thereby positioning the support pin 3 and facilitating subsequent welding of the support pin 3.

In one embodiment, referring to FIGs. 2 and 3, the slider body 1 has a first end surface 12 (i.e., a mating surface between the slider body 1 and the valve seat of the switching valve). The inner shell 2 has a second end surface 25 (i.e., an end surface at the opening of the inner shell 2). The second end surface 25 is located in the internal cavity 11. A distance between the first end surface 12 of the slider body 1 and the second end surface 25 of the inner shell 2 is defined as A, the distance A between the first end surface 12 of the slider body 1 and the second end surface 25 of the inner shell 2 is in a range of 0.1 mm to 1 mm. The straight section 24 is parallel to the first end surface 12 of the slider body 1, and a distance between the straight section 24 and the first end surface 12 of the slider body 1 is defined as B, the distance B between the straight section and the first end surface 12 of the slider body 1 is in a range of 1.5 mm to 8 mm. The slider body 1 may wear after long-term use. Since the inner shell 2 is located in the internal cavity 11 of the slider body 1, the inner shell 2 may be exposed outside the internal cavity 11 after the slider body 1 is worn, which affects a sealing between the slider body 1 and a main valve body of the switching valve. The distance A between the first end surface 12 and the second end surface 25 reserves a wear allowance for the first end surface 12 of the slider body 1. Specifically, the distance A between the first end surface 12 and the second end surface 25 may be set to 0.1 mm, 0.3 mm, 0.5 mm, or 1 mm. If the distance B between the straight section 24 and the first end surface 12 is less than 1.5 mm, there is a risk that solder may flow to the first end surface 12 of the slider body 1, affecting a sealing performance, and the excessively small distance is not conducive to the welding of the support pin 3. If the distance B between the straight section 24 and the first end surface 12 is greater than 8 mm, when the support pin 3 is fixed to the straight section 24 at this distance by welding, the position of the support pin 3 is too deep into the inner shell 2, resulting in excessively large flow resistance of the inner flow channel 22, which is not conducive to the flow of fluid in the inner flow channel 22. Specifically, the distance B between the straight section 24 and the first end surface 12 may be set to 1.5 mm, 3 mm, 5.5 mm, or 8 mm.

The present application further provides a switching valve, including the sliding block assembly according to any one of the above embodiments. The switching valve may be specifically configured as a four-way valve. The switching valve adopting the above sliding block assembly can simplify the machining of the sliding block assembly and the inner shell 2. During the use of the switching valve, the inner shell 2 will not wobble to generate noise, and the inner shell 2 will not detach.

Finally, it should be noted that the above embodiments are only used to describe the technical solutions of the present application, but not to limit them. Although the present application is described in detail with reference to the foregoing embodiments, those of ordinary skill in the art should understand that they can still modify the technical solutions recorded in the foregoing embodiments, or equivalently replace some or all of the technical features; and such modifications or replacements do not make the essence of the corresponding technical solutions depart from the scope of the technical solutions of the embodiments of the present application.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims.

## Claims

1. A sliding block assembly, comprising a slider body and an inner shell, wherein the slider body is provided with an internal cavity, the inner shell is located in the internal cavity, an outer flow channel is enclosed between an outer surface of the inner shell and a cavity wall of the internal cavity, an inner flow channel is enclosed by an inner surface of the inner shell, **characterized in that** the inner shell is fixed to the cavity wall of the internal cavity by welding.

2. The sliding block assembly of claim 1, wherein two welding portions are disposed on the inner shell and located on two sides of the inner shell, respectively.

3. The sliding block assembly of claim 2, wherein the inner shell is provided with a notch, the notch is located at an opening of the inner shell, and the notch is configured as the welding portion.

4. The sliding block assembly of claim 3, wherein the notch comprises a straight section.

5. The sliding block assembly of claim 1, wherein the slider body has a first end surface, the inner shell has a second end surface, the second end surface of the inner shell is located in the internal cavity, a distance between the first end surface of the slider body and the second end surface of the inner shell is defined as A, and the distance A between the first end surface of the slider body and the second end surface of the inner shell is in a range of 0.1 mm to 1 mm.

6. The sliding block assembly of claim 4, wherein the slider body has a first end surface, the straight section is parallel to the first end surface of the slider body, a distance between the straight section and the first end surface of the slider body is defined as B, and the distance B between the straight section and the first end surface of the slider body is in a range of 1.5 mm to 8 mm.

7. The sliding block assembly of claim 3, further comprising a support pin, wherein the support pin is located in the internal cavity, and an end of the support pin is fixed to the slider body and/or the inner shell by welding.

8. The sliding block assembly of claim 7, wherein the notch further comprises a positioning recess, and a shape of the positioning recess is adapted to an outer contour of the support pin.

9. The sliding block assembly of claim 1, wherein the slider body comprises a main body and a steel bushing, an outer surface of the steel bushing is fixedly connected to the main body, and an inner surface of the steel bushing forms the internal cavity.

10. A switching valve, **characterized by** comprising the sliding block assembly of any one of claims 1 to 9.
